# EUROPÄISCHE PATENTSCHRIFT

(11) **EP 1 012 226 B1**
(45) Veröffentlichungstag und Bekanntmachung des Hinweises auf die Patenterteilung: **05.02.2003**
(21) Anmeldenummer: 98954153.7
(22) Anmeldetag: 10.09.1998
(51) Int. Cl.: C12C 13/02

(54) **STRÖMUNGSLEITEINRICHTUNG IN EINER WÜRZEPFANNE**
FLOW GUIDING DEVICE IN A WORT COPPER
DISPOSITIF DE GUIDAGE DE FLUX PLACE DANS UNE CHAUDIERE A MOUT

(30) Priorität: 11.09.1997 DE 19740034
(43) Veröffentlichungstag der Anmeldung: 28.06.2000
(73) Patentinhaber: Hrch. Huppmann GmbH, 97318 Kitzingen (DE)
(72) Erfinder: LENZ, August, D-97318 Kitzingen (DE); HAMACHER, Marco, D-97353 Wiesentheid (DE); KANTELBERG, Bernd, D-97332 Volkach (DE)
(74) Vertreter: Böck, Bernhard, Dipl.-Ing.
(86) Internationale Anmeldenummer: DE9802671
(87) Internationale Veröffentlichungsnummer: WO99013050

(56) Entgegenhaltungen:
- EP-A- 0 605 783
- DE-A- 19 517 928
- DE-C- 19 539 509

## Beschreibung

Die Erfindung betrifft eine Strömungsleiteinrichtung in eine Würzepfanne nach dem Oberbegriff des Patentanspruches 1.

Bei der Würzekochung erfolgt neben einer Reihe weiterer Vorgänge zum einen eine Konzentration der Würze durch Verdampfung überschüssigen Wassers auf den gewünschten Stammwürzegehalt und zum anderen eine Ausdampfung unerwünschter Aromastoffe sowie insbesondere von Dimethylsulfid (DMS). Üblicherweise erfolgt die Kochung in einer Würzepfanne mit Innen- oder Außenkocher. Dabei wird die entweder innerhalb der Würzepfanne mittels eines Wärmetauschers oder außerhalb der Würzepfanne in einem Außenkocher erhitzte Würze in der Würzepfanne vertikal nach oben über den Flüssigkeitsspiegel der Würze gefördert und mittels eines kegelförmigen Umlenkschirms, der von der Würze angeströmt wird, nach radial außen umgeleitet. Dabei dient der Umlenkschirm insbesondere einer verstärkten Würzebewegung, wodurch das Ausdampfen von Aromastoffen gefördert und eine sich möglicherweise bildende Schaumschicht auf der Würze zerstört werden soll.

Nachteilig dabei ist jedoch insbesondere, daß durch den kegelförmigen Umlenkschirm eine gleichförmige "laminare" Abströmung der erhitzten Würze auf den Flüssigkeitsspiegel in der Würzepfanne erfolgt, wodurch eine Grenzschicht auf dem Flüssigkeitsspiegel geschaffen wird, die ein Verdampfen überschüssigen Wassers und ein Ausdampfen der Aromastoffe erschwert. Dabei erfolgt in dieser Grenzschicht insbesondere erneut eine teilweise Kondensation der verdampften Flüssigkeit, wobei die an die Gasphase gebundenen Aromastoffe in unerwünschter Weise wiederum teilweise an die Würze zurückgeführt werden.

Es ist bereits aus der Patentschrift DE 195 39 509 Cl eine Strömungsleiteinrichtung bekannt, auf deren Anströmseite zumindest zwei Strömungsleitsegmente angeordnet sind, zwischen denen der Würzestrom nach radial außen umgeleitet wird. Aufgrund dieser Gestaltung erfolgt an den

Strömungsleitsegmenten eine Aufteilung des nach radial außen geleiteten Würzestroms dergestalt, daß hinter den Strömungsleitsegmenten Strömungsschatten entstehen.

Nachteilig bei dieser Strömungsleiteinrichtung ist es, daß infolge der Strömungsschatten im Bereich hinter den Strömungsleitsegmenten ein Ausdampfen der Aromastoffe erschwert wird.

Von diesem Stand der Technik ausgehend ist es Aufgabe der vorliegenden Erfindung, eine Strömungsleiteinrichtung in eine Würzepfanne zu schaffen, durch die der radial nach außen geleitete Würzestrom aufgeteilt wird, wobei jedoch keine Strömungsschatten entstehen.

Diese Aufgabe wird durch eine Strömungsleiteinrichtung nach der Lehre des Patentanspruches 1 gelöst.

Vorteilhafte Ausgestaltungen der Erfindung sind Gegenstand der Unteransprüche.

Erfindungsgemäß weist die Strömungsleiteinrichtung Teilstege auf, die derart angeordnet sind, daß zwischen jeweils zwei benachbarten Teilstegen ein sich nach radial außen erweiterndes und nach radial außen offenes Strömungssegment geschaffen wird. Dieses Strömungssegment wird durch ein Anströmflächenelement abgeschlossen, das in axialer Richtung, bezogen auf die Würzeanströmrichtung, zwei benachbarte Teilstege miteinander verbindet, wobei die Anströmflächenelemente zwei benachbarter Strömungssegmente von radial innen nach radial außen einen unterschiedliche Anstellwinkel, bezogen auf eine zur Anströmrichtung senkrecht verlaufende Ebene, aufweisen. Hierdurch wird erreicht, daß bei Anströmung der Strömungsleiteinrichtung durch die Würze der Würzestrom in alle Richtungen radial nach außen geführt wird, ohne daß Strömungsschatten durch Strömungshindernisse entstehen. Der Würzestrom in zwei benachbarte Strömungssegmente wird aufgrund der unterschiedlichen Anstellwinkel der Anströmflächenelemente in zwei unterschiedliche Raumwinkelbereiche umgeleitet, so daß der Würzestrom im Ergebnis in mehrere Teilströme aufgeteilt wird, in denen unterschiedliche Strömungsverhältnisse herrschen.

Nach einer bevorzugten Ausführungsform sind vier bis sechzehn, insbesondere zehn, Strömungssegmente vorgesehen, die gleichmäßig über den gesamten Umfang verteilt an der Strömungsleiteinrichtung angeordnet sind.

Die Anstellwinkel der Anströmflächenelement zweier benachbarter Strömungssegmente, bezogen auf eine senkrecht zur Anströmrichtung verlaufende Ebene, sind voneinander verschieden, wobei erfindungsgemäß der Anstellwinkel jedes einzelnen Anströmflächenelements grundsätzlich beliebig gewählt werden kann. Als besonders vorteilhaft erweist sich die Wahl von nur zwei verschiedenen Anstellwinkeln, so daß jeweils abwechselnd ein Strömungssegment mit einem kleineren Anstellwinkel und ein Strömungssegment mit einem größeren Anstellwinkel nebeneinander angeordnet sind. Es ergibt sich im Ergebnis eine erste Gruppe, die durch die geradzahligen Strömungssegmenten gebildet wird und jeweils den gleichen Anstellwinkel der Anstromflächenelemente aufweisen, und eine zweite Gruppe, die durch die ungeradzahligen Strömungssegmenten gebildet wird und ebenfalls jeweils den gleichen Anstellwinkel aufweisen, der jedoch zum Anstellwinkel der ersten Gruppe unterschiedlichen ist.

Eine vorteilhafte Ausgestaltung der Stromungsleiteinrichtung ergibt sich, wenn die Strömungsleiteinrichtung einen im wesentlichen flach kegelförmigen Schirm mit von der Anströmseite wegweisender Kegelspitze aufweist, an dessen anströmseitiger Kegelinnenfläche die Teilstege derart angeordnet sind, daß die Anströmflächenelemente der ersten Gruppe von Strömungssegmenten von der Kegelinnenfläche gebildet werden. Im Ergebnis werden dadurch die Anströmflächenelemente aller Strömungssegmente der ersten Gruppe durch Segmente der Kegelinnenfläche des Schirms gebildet, was eine einfache und kostengünstige Fertigung dieser Anströmflächenelemente ermöglicht.

Weiterhin vorteilhaft ist es, wenn die Hüllfläche der Anströmflächenelemente der zweiten Gruppe von Strömungssegmenten einem Mantelflächenabschnitt eines Kegels oder einer mehrseitigen Pyramide entspricht, wobei der Öffnungswinkel des Kegels oder der Pyramide zumindest geringfügig kleiner als der Kegelöffnungswinkel des Schirms ist. Wegen des kleineren Öffnungswinkel können die Anströmflächenelemente der zweiten Gruppe auf einfache Weise anströmseitig im Bereich der Kegelinnenfläche des Schirms angeordnet werden. Entspricht die Hüllfläche einem Kegel, sind die Anströmflächenelemente jeweils leicht gebogen ausgeführt. Entspricht die Hüllfläche einer Pyramide, reichen ebene Anströmflächenelemente aus, die beispielsweise kostengünstig aus entsprechendem Plattenmaterial ausgeschnitten werden können.

Um eine gleichmäßige Umlenkung des Würzstromes zu gewährleisten, können die Strömungssegmente im Radialschnitt eine im wesentlichen dreieckige oder trapezartige Gestalt aufweisen.

Grundsätzlich können die erfindungsgemäßen Teilstege unter einem beliebigen Winkel zwischen den benachbarten Strömungssegmenten verlaufen. Vorteilhaft ist es, wenn die Strömungssegmente seitlich von Teilstegen begrenzt werden, die im wesentlichen senkrecht zur Radialebene der Strömungsleiteinrichtung verlaufen Dadurch ergibt sich eine gleichmäßige Aufteilung des Wurzestroms in die einzelnen Strömungssegmente.

Nach einer bevorzugten Ausführungsform können die zum Würzeauslaß weisenden Kanten der Teilstege in einer Radialebene verlaufen. Im Ergebnis können die Teilstege jeweils soweit in Richtung des Würzeauslaß heruntergezogen ausgebildet werden und gegenüber den Anströmflächenelementen der zweiten Gruppe soweit überstehen, daß die Teilströme benachbarter Strömungssegmente in der Strömungsleiteinrichtung im wesentlichen vollständig voneinander getrennt werden.

Nach einer weiteren bevorzugten Ausführungsform weist die Strömungsleiteinrichtung einen an sich bekannten im mittleren Bereich der Strömungsleiteinrichtung auf der Anströmseite angeordneten Leitkegel mit entgegen der Anströmrichtung weisender Spitze auf. Dieser Leitkegel ermöglicht beim Anströmen der Würze eine leichte, zuverlässige und gleichmäßige Umlenkung des Würzestroms von der Mitte nach radial außen

Um eine gleichmäßigen Übergang des Würzestroms vom Leitkegel zu den Anströmflächenelementen zu erreichen, können die nach radial innen weisenden Kanten aller Anströmflächenelemente im Bereich einer Kreislinie verlaufen, die durch die Anlage des Leitkegels auf der Anströmseite des Schirms gebildet wird. Im Ergebnis wird dadurch ein im wesentlichen kontinuierlicher Übergang der radial nach außen gerichtete Strömung vom Leitkegel auf die Anströmflächenelemente erreicht. Von der Kreislinie ausgehend verläuft die Strömung in den Strömungssegmenten der beiden Gruppen mit verschiedenen Strömungswinkeln.

Hierbei erweist es sich als besonders vorteilhaft, wenn die nach radial innen weisenden Enden der Teilstege in den Leitkegel auslaufen und an diesem befestigt bzw. an diesen angeformt sind.

Die nach radial außen weisenden Enden der Teilstege können vorzugsweise im wesentlichen mit der Umfangskante des Schirms abschließen.

Vorteilhaft ist es, wenn die nach radial außen offenen, durch jeweils zwei benachbarte Teilstege, das dazwischen angeordnete Anströmflächenelement und die Schirmaußenkante gebildeten Öffnungen der zweiten Gruppe von Strömungssegmenten jeweils durch ein vorzugsweise teilkreisbogenförmiges Abschlußelement verschlossen sind, wobei der Durchmesser des Teilkreisbogens im wesentlichen dem Durchmesser des Schirms entspricht. Dadurch werden die Räume zwischen dem Schirm und den Anströmflächenelementen der zweiten Gruppe abgeschlossen und ein Eindringen von Würze in diese Räume, in denen keine Strömung vorhanden ist, ausgeschlossen. Außerdem kann die radial äußere Kante der Anströmflächenelemente der zweiten Gruppe an der Innenseite dieser Abschlußelemente einfach befestigt, beispielsweise angeschweißt, werden.

Eine verbesserte Trennung der einzelnen Teilströme der Würze kann erreicht werden, wenn die seitlichen Kanten der Abschlußelemente gegenüber allen Teilstegen zumindest einen kleinen seitlichen Überstand aufweisen, der in die nach radial außen weisende Öffnungen des benachbarten Strömungssegments der ersten Gruppe ragt. Durch den Überstand reißt die Strömung entlang der Oberfläche der Teilstege in den Strömungssegmenten der ersten Gruppe beim Erreichen der nach radial außen weisende Öffnung ab, so daß zwischen den an benachbarten Strömungssegmenten austretenden Teilströmen ein kleiner radial verlaufender Strömungsschatten entsteht.

Gemäß einer weiteren Ausführungsform der Strömungsleiteinrichtung erweist es sich als vorteilhaft, wenn die im wesentlichen radial verlaufenden Teilstege zumindest geringfügig bogenförmig, vorzugsweise teilkreisbogenförmig ausgebildet sind, wodurch die einzelnen Teilströme einen leichten Drall erhalten.

Ebenso ist es vorteilhaft, wenn die Anströmflächenelemente der ersten und/oder der zweiten Gruppe von Strömungssegmenten in ihrem Anstellwinkel verstellbar sind. So können die Eigenschaften der Strömungsleiteinrichtung einfach an die Eigenschaften der Würzepfanne, beispielsweise bei der Inbetriebnahme der Würzepfanne, angepaßt werden.

Eine weitere Möglichkeit die Eigenschaften der Strömungsleiteinrichtung an die Eigenschaften der Würzepfanne anpassen zu können besteht darin, Mittel zur Höhenverstellung der Strömungsleiteinrichtung relativ zum Würzeauslaß vorzusehen, so daß der Abstand zwischen Würzeauslaß und Strömungsleiteinrichtung einstellbar ist.

Nachfolgend wird die Erfindung anhand lediglich bevorzugte Ausführungsformen darstellender Zeichnungen näher erläutert. Es zeigt:
- **Fig. 1**: in schematischer Darstellung einen Innenkocher in einer gebrochen dargestellten Würzpfanne mit aufgesetzter Strömungsleiteinrichtung gemäß der Erfindung im Querschnitt;
- **Fig. 2**: in schematischer Darstellung eine erfindungsgemäße Strömungsleiteinrichtung in Ansicht von oben;
- **Fig. 3**: die Strömungsleiteinrichtung gemäß **Fig. 2** in einer gebrochenen Schnittdarstellung entlang der Schnittlinie I-I;
- **Fig. 4**: die Strömungsleiteinrichtung gemäß **Fig. 2** in einer gebrochenen Schnittdarstellung entlang der Schnittlinie II-II,
- **Fig. 5**: die Strömungsleiteinrichtung gemäß **Fig. 2** in seitlicher Ansicht.

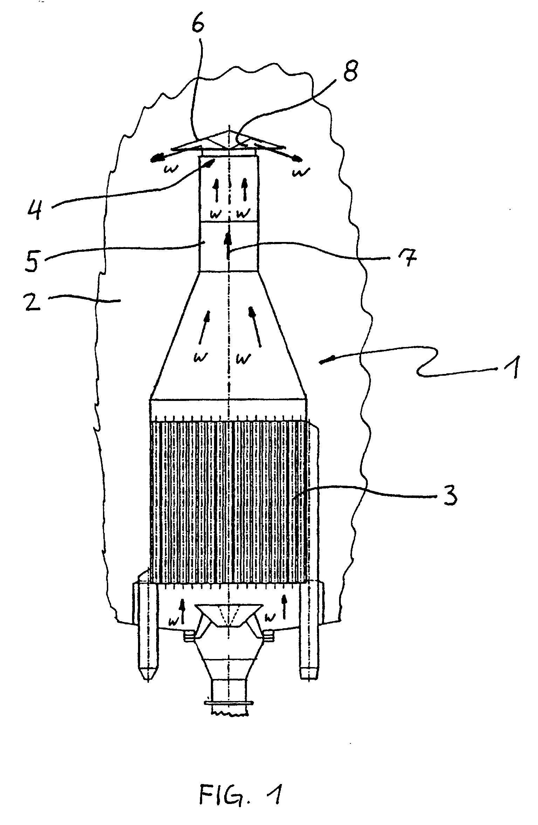

In **Fig. 1** ist ein Innenkocher 1 dargestellt, der im Inneren einer gebrochen dargestellten Würzpfanne 2 angeordnet ist. Der Innenkocher 1 weist einen Rohrbündelwärmetauscher 3 auf, in dem die in der Würzpfanne befindliche Würze aufgeheizt und aufgrund von Konvektion in der Darstellung nach **Fig. 1** vertikal nach oben transportiert wird. Am oberen Ende 4 eines rohrförmigen Bereichs 5 des Innenkochers 1 ist eine Strömungsleiteinrichtung 6 gemäß der vorliegenden Erfindung angeordnet, die lediglich schematisch dargestellt ist. Wie durch die Pfeile W schematisch angedeutet ist, wird die Strömungsleiteinrichtung 6 von der Würze W gemäß der vertikal nach oben ausgerichteten Anströmrichtung 7 von unten angeströmt, wobei aufgrund der Strömungsleiteinrichtung 6 der Würzestrom W allseitig nach radial außen umgelenkt wird.

Zur besseren Umlenkung des Würzestroms und insbesondere zur Vermeidung eines Stauraums in der Strömungsleiteinrichtung 6 weist diese einen Leitkegel mit nach unten zum Würzestrom weisende Kegelspitze auf. Um den Leitkegel herum sind mehrere schematisch dargestellte Teilstege 8 angeordnet, durch die mehrere Strömungssegmente auf der Anströmseite der Strömungsleiteinrichtung 6 gebildet werden.

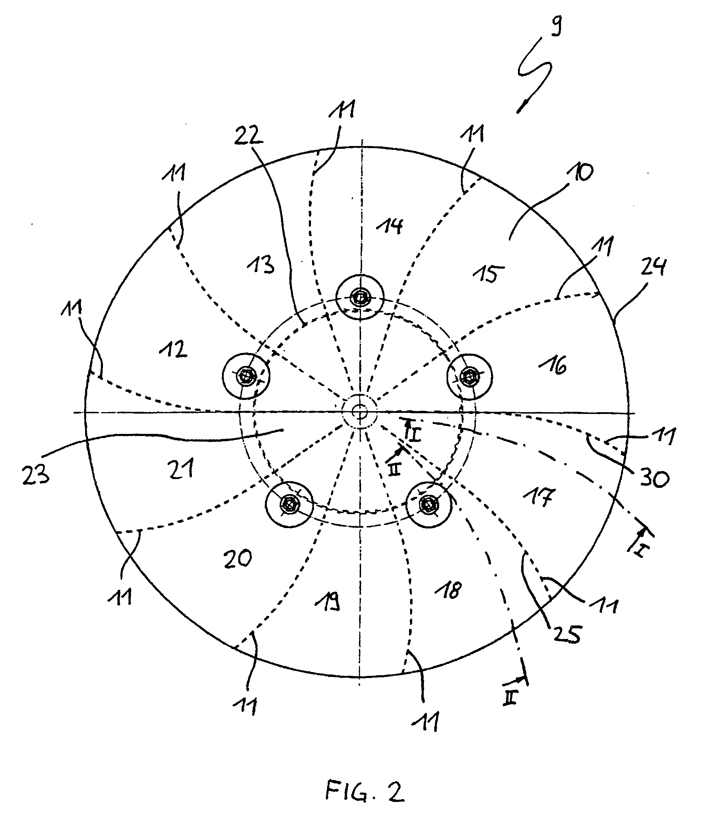

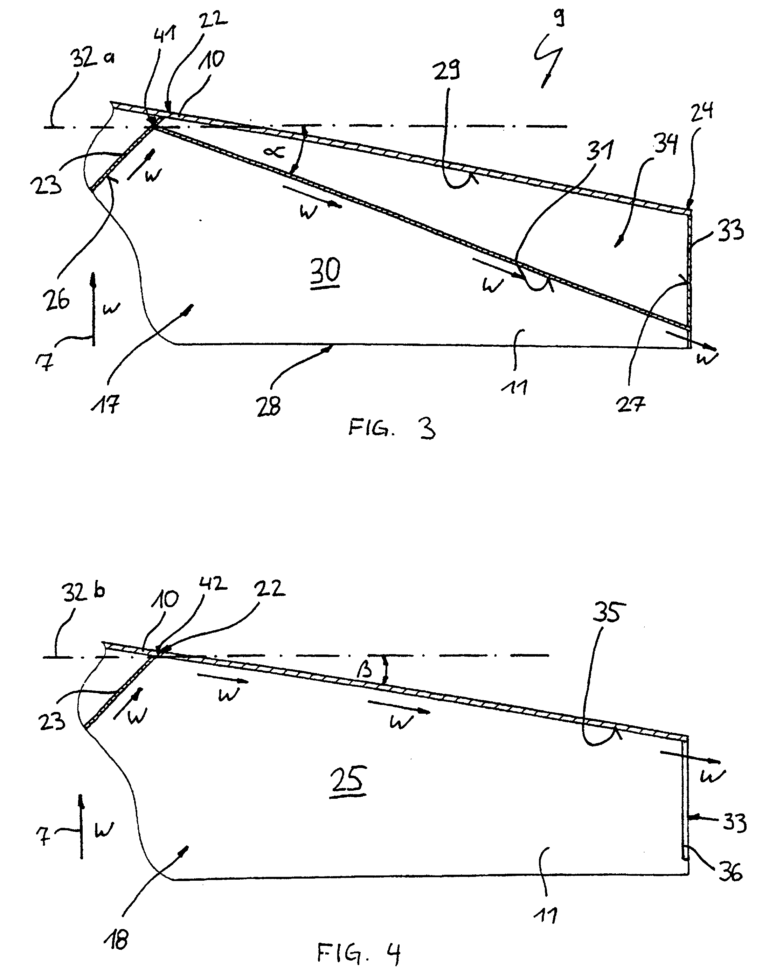

**Fig. 2** zeigt eine erfindungsgemäße Strömungsleiteinrichtung 9 in Ansicht von oben. Auf der Oberseite der Strömungsleiteinrichtung 9 ist ein flach kegelförmiger Schirm 10 angeordnet, dessen Kegelspitze von der Anströmseite weg nach oben weist. Auf der Anströmseite des Schirms 10 sind insgesamt zehn gestrichelt eingezeichnete Teilstege 11 angeordnet, durch die die Anströmseite der Strömungsleiteinrichtung 9 in die sich nach radial außen erweiternden und nach radial außen offenen Strömungssegmente 12 bis 21 aufgeteilt wird. Die Anströmflächenelemente 35 (siehe **Fig. 4)** der Strömungssegmente 12, 14, 16, 18 und 20, die eine erste Gruppe von Strömungssegmenten bilden, weisen den gleichen Anstellwinkel β auf. Die Strömungssegmente 13, 15, 17, 19 und 21 bilden eine zweite Gruppe von Strömungssegmenten und deren Anströmflächenelemente 29 (siehe **Fig. 3)** weisen einen gleichen zum Anstellwinkel β der ersten Gruppe unterschiedlichen Anstellwinkel α auf.

Die Strömungssegmente 12 bis 21 weisen einen im wesentlichen trapezförmigen Radialschnitt auf. Die nach radial innen weisenden Kanten 41 und 42 der Anströmflächenelemente 29 und 35 aller Strömungssegmente 12 bis 21 verlaufen im Bereich einer Kreislinie 22, die durch die Anlage eines Leitkegels 23 auf der Anströmseite des Schirms 10 gebildet wird. Die im wesentlichen radial verlaufenden Teilstege 11 verlaufen nicht linear, sondern bogenförmig von innen zur Umfangskante 24 des Schirms 10.

**Fig. 3** zeigt einen Schnitt durch das Strömungssegment 17 entlang der Schnittlinie I-I. Man erkennt den Schirm 10, den äußeren Teil des Leitkegels 23 und den Teilsteg 30, daß heißt den Teilsteg, der zwischen den Strömungssegmenten 17 und 16 angeordnet ist und dessen Form und Gestaltung allen anderen Teilstegen 11 entspricht. Das nach radial innen weisende Ende 26 des Teilstegs 30 läuft in den Leitkegel 23 aus und wird an diesem festgeschweißt. Das nach radial außen weisende Ende 27 des Teilstegs 30 schließt mit der Umfangskante 24 des Schirms 10 ab. Die zum Würzeauslaß weisende Kante 28 des Teilstegs 30 verläuft in einer Radialebene, die durch die unteren Kanten aller Teilstege 11 definiert wird. Die obere Kante 29 des Teilstegs 30 ist auf der Anströmseite des Schirms 10 befestigt.

Zwischen dem Teilsteg 25, der zwischen den Strömungssegmenten 17 und 18 angeordnet ist, und dem Teilsteg 30 (siehe **Fig. 2)** ist ein Anströmflächenelement 31 befestigt, das das Strömungssegment 17 von oben abschließt. Wie durch die Pfeile W schematisch angedeutet, strömt die Würze nacheinander entlang der Oberfläche des Leitkegels 23 und des Anströmflächenelements 31 radial nach außen. Die Würze strömt dabei schräg nach unten aus, da das Anströmflächenelement 31, genau wie die Anströmflächenelemente in allen Strömungssegmenten der zweiten Gruppe, mit dem Anstellwinkel α, bezogen auf eine senkrecht zur Anströmrichtung 7 verlaufenden Radialebene 32a, in der Strömungsleiteinrichtung 9 befestigt ist.

Die durch die Teilstege 25 und 30, das dazwischen angeordnete Anströmflächenelement 31 und die Umfangskante 24 des Schirms 10 gebildete, radial nach außen gerichtete Öffnung wird durch ein Abschlußelement 33 verschlossen. Dadurch entsteht zwischen dem Schirm 10, dem Anströmflächenelement 31 und den Teilstegen 25 und 30 ein geschlossener Raum 34, in den keine Würze eindringen kann.

**Fig. 4** zeigt das Strömungssegment 18 in einer Schnittdarstellung entlang der Schnittlinie II-II. Das Anströmflächenelement 35 wird im Strömungssegment 18, wie in allen anderen Strömungssegmenten der ersten Gruppe, durch die Kegelinnenfläche des Schirms 10 gebildet. Die Würze strömt entsprechend den Pfeilen W nach radial außen und schräg nach unten, wobei der Anstellwinkel β, wie in allen Strömungssegmente der ersten Gruppe, zwischen dem Anströmflächenelement 35 und einer senkrecht zur Anströmrichtung 7 verlaufenden Radialebene 32b kleiner ist als der Anstellwinkel α in den Strömungssegmenten der zweiten Gruppe.

Die Strömung in den benachbarten Strömungssegmenten 17 und 18 wird durch den Teilsteg 25 vollständig voneinander getrennt. Da die Anstellwinkel α und β unterschiedlich gewählt sind, strömt die Würze in den benachbarten Strömungssegmenten mit unterschiedlichen Neigungswinkeln nach außen. Die seitliche Kante 36 des Abschlußelements 33 steht gegenüber dem Teilsteg 25 leicht über und ragt in die nach radial außen weisende Öffnung des Strömungssegments 18. Dadurch wird ein Abreißen der Würzeströmung beim Austritt des Würzestroms aus dem Strömungssegment 18 im Bereich der Kante 36 bewirkt.

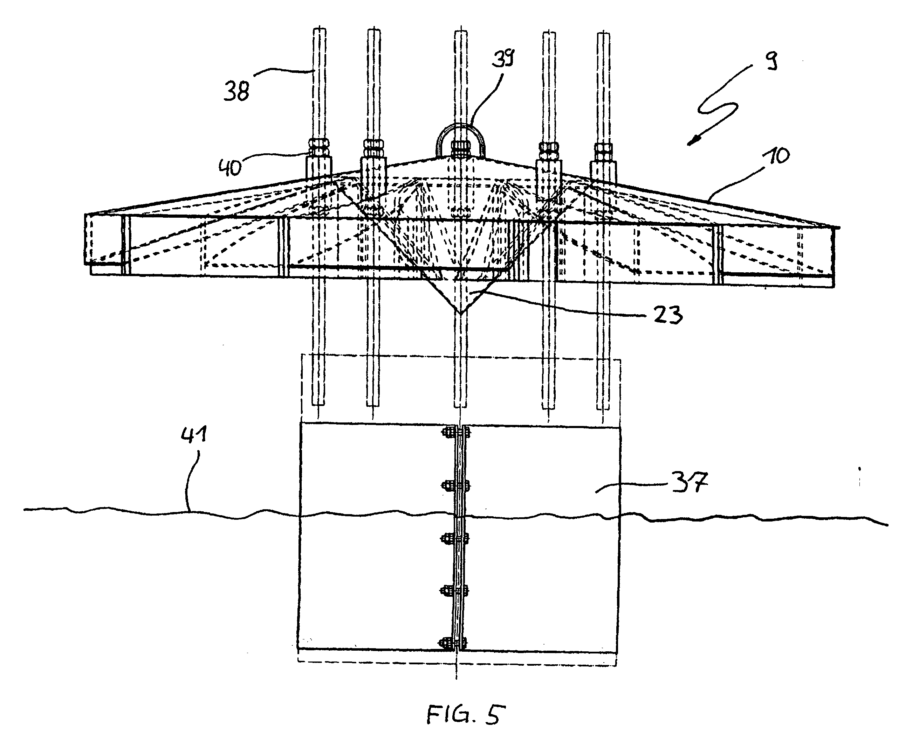

**Fig. 5** zeigt die Strömungsleiteinrichtung 9 in seitlicher Ansicht. Die Strömungsleiteinrichtung 9 ist oberhalb des oberen Endes eines nicht dargestellten Innenkochers angeordnet. Die Strömungsleiteinrichtung 9 kann dabei axial auf den Gewindestangen 38 verschoben werden. Zum Anheben der Strömungsleiteinrichtung 9 dient die Zugöse 39. Mittels der Stellschrauben 40 kann die Lage der Strömungsleiteinrichtung in einem bestimmten Abstand zum Flüssigkeitsspiegel 41 in der Würzepfanne auf der Gewindestangen 38 fixiert werden. Die axial verstellbare Innenkocher-Rohrmanschette 37 dient zusätzlich zur Feinabstimmung des Abstandes zwischen Innenkocher und Strömungsleiteinrichtung 9.

## Patentansprüche

1. Strömungsleiteinrichtung in einer Würzepfanne zur Umleitung eines erhitzten und in der Würzepfanne nach oben geführten Würzestroms die über dem Auslaß des Würzestroms angeordnet und unter Umleitung der Würze nach im wesentlichen radial außen vom Würzestrom anströmbar ist, mit anströmseitig an der Strömungsleiteinrichtung angeordneten sich im wesentlichen in radialer Richtung erstreckenden Teilstegen,
**dadurch gekennzeichnet,**
**daß** die Teilstege (11) derart angeordnet sind, daß zwischen jeweils zwei benachbarten Teilstegen (11) ein sich nach radial außen erweiterndes und nach radial außen offenes Strömungssegment (12, 13, 14, 15, 16, 17, 18, 19, 20, 21) gebildet wird, das von einem jeweils die beiden benachbarten Teilstege (11) verbindenden Anströmflächenelement (31, 35) in axialer Richtung, bezogen auf die Würzeanströmrichtung (7), abgeschlossen wird, wobei die Anströmflächenelemente (31, 35) jeweils benachbarter Strömungssegmente (12, 13, 14, 15, 16, 17, 18, 19, 20, 21) von radial innen nach radial außen einen unterschiedlichen Anstellwinkel (α, β), bezogen auf eine senkrecht zur Anströmrichtung (7) verlaufende Ebene, aufweisen.

2. Strömungsleiteinrichtung nach Anspruch 1,
**dadurch gekennzeichnet,**
**daß** vier bis sechzehn, vorzugsweise zehn, Strömungssegmente (12, 13, 14, 15, 16, 17, 18, 19, 20, 21) vorgesehen sind, die gleichmäßig über den Umfang verteilt an der Strömungsleiteinrichtung (9) angeordnet sind.

3. Strömungsleiteinrichtung-nach Anspruch 1 oder 2,
**dadurch gekennzeichnet,**
**daß** die Anströmflächenelemente (35) der eine erste Gruppe bildenden geradzahligen Strömungssgemente (12, 14, 16, 18, 20) den gleichen Anstellwinkel (β) und die Anströmflächenelemente (31) der eine zweite Gruppe bildenden ungeradzahligen Strömungssegmente (13, 15, 17, 19, 21) einen gleichen zum ersten Anstellwinkel (β) unterschiedlichen Anstellwinkel (α) aufweisen.

4. Strömungsleiteinrichtung nach einem der Ansprüche 1 bis 3,
**gekennzeichnet durch**
einen im wesentlichen flach kegelförmigen Schirm (10) mit von der Anströmseite wegweisender Kegelspitze, an dessen anstromseitiger Kegelinnenfläche die Teilstege (11) derart angeordnet sind, daß die Anströmflächenelemente (35) der ersten Gruppe von Strömungssegmenten (12, 14, 16, 18, 20) von der Kegelinnenfläche gebildet werden.

5. Strömungsleiteinrichtung nach einem der Ansprüche 1 bis 4,
**dadurch gekennzeichnet,**
**daß** die Hüllfläche der Anströmflächenelemente (31) der zweiten Gruppe von Strömungssegmenten (13, 15, 17, 19, 21) einem Mantelflächenabschnitt eines Kegels oder einer mehrseitigen Pyramide entspricht, wobei der Öffnungswinkel des Kegels oder der Pyramide zumindest geringfügig kleiner als der Kegelöffnungswinkel des Schirms (10) ist.

6. Strömungsleiteinrichtung-nach einem der Ansprüche 1 bis 5,
**dadurch gekennzeichnet,**
**daß** die Strömungssegmente (12, 13, 14, 15, 16, 17, 18, 19, 20, 21) im Radialschnitt eine im wesentlichen dreieckige oder trapezartige Gestalt aufweisen.

7. Strömungsleiteinrichtung nach einem der Ansprüche 1 bis 6,
**dadurch gekennzeichnet,**
**daß** die Teilstege (11) im wesentlichen senkrecht zu den Radialebenen (32a, 32b) der Strömungsleiteinrichtung (9) verlaufen.

8. Strömungsleiteinrichtung nach einem der Ansprüche 1 bis 7,
**dadurch gekennzeichnet,**
**daß** die zum Würzeauslaß weisenden Kanten (28) der Teilstege (11) in einer Radialebene verlaufen.

9. Strömungsleiteinrichtung nach einem der Ansprüche 1 bis 8,
**gekennzeichnet durch**
einen im mittleren Bereich der Strömungsleiteinrichtung (9) auf der Anströmseite angeordneten Leitkegel (23) mit entgegen der Anströmrichtung (7) weisender Kegelspitze.

10. Strömungsleiteinrichtung nach Anspruch 9,
**dadurch gekennzeichnet,**
**daß** die nach radial innen weisenden Kanten aller Anströmflächenelemente (31, 35) im Bereich einer Kreislinie (22) verlaufen, die durch die Anlage des Leitkegels (23) auf der Anströmseite des Schirms (10) gebildet wird.

11. Strömungsleiteinrichtung nach Anspruch 9 oder 10,
**dadurch gekennzeichnet,**
**daß** die nach radial innen weisenden Enden (26) der Teilstege (11) in den Leitkegel (23) auslaufen und an diesem befestigt bzw. an diesen angeformt sind.

12. Strömungsleiteinrichtung nach einem der Ansprüche 1 bis 11,
**dadurch gekennzeichnet,**
**daß** die nach radial außen weisenden Enden (27) der Teilstege (11) im wesentlichen mit der Umfangskante (24) des Schirms (10) abschließen.

13. Strömungsleiteinrichtung nach einem der Ansprüche 1 bis 12,
**dadurch gekennzeichnet,**
**daß** die nach radial außen offenen, durch jeweils zwei benachbarte Teilstege (11), das dazwischen angeordnete Anströmflächenelement (31) und die Umfangskante (24) des Schirms (10) gebildeten Öffnungen der zweiten Gruppe von Strömungssegmenten (13, 15, 17, 19, 21) jeweils durch ein vorzugsweise teilkreisbogenförmiges Abschlußelement (33) verschlossen sind, wobei der Durchmesser des Teilkreisbogens im wesentlichen dem Durchmesser des Schirms (10) entspricht.

14. Strömungsleiteinrichtung nach Anspruch 13,
**dadurch gekennzeichnet,**
**daß** die seitlichen Kanten (36) der Abschlußelemente (33) gegenüber allen Teilstegen (11) zumindest einen kleinen Überstand aufweisen, der in die nach radial außen weisende Öffnungen des benachbarten Strömungssegments (12, 14, 16, 18, 20) der ersten Gruppe ragt.

15. Strömungsleiteinrichtung nach einem der Ansprüche 1 bis 14,
**dadurch gekennzeichnet,**
**daß** die im wesentlichen radial verlaufenden Teilstege (11) zumindest geringfügig bogenförmig, vorzugsweise teilkreisbogenförmig ausgebildet sind.

16. Strömungsleiteinrichtung nach einem der Ansprüche 1 bis 15,
**dadurch gekennzeichnet,**
**daß** die Anströmflächenelemente (31, 35) der ersten Gruppe von Strömungssegmenten (12, 14, 16, 18, 20) und/oder der zweiten Gruppe von Strömungssegmenten (13, 15, 17, 19, 21) in ihrem Anstellwinkel (α, β) verstellbar sind.

17. Strömungsleiteinrichtung nach einem der Ansprüche 1 bis 16,
**gekennzeichnet durch**
Mittel (38, 39, 40) zur Höhenverstellung der Strömungsleiteinrichtung (9) relativ zum Würzeauslaß.

## Revendications

1. Dispositif de guidage du courant dans une chaudière à moût pour dévier un courant de moût chauffé et guidé vers le haut dans la chaudière à moût, ce dispositif étant disposé au-dessus de la sortie du courant de moût et pouvant être touché par le courant de moût, par dérivation du moût vers l'extérieur essentiellement radialement, ce dispositif comportant des ailettes de séparation qui sont disposées sur le dispositif de guidage du courant, du côté de l'arrivée du courant, et qui s'étendent essentiellement dans la direction radiale,
**caractérisé en ce que** les ailettes de séparation (11) sont disposées de telle façon que chaque fois, entre deux ailettes de séparation (11) voisines, se forme un secteur de courant (12, 13, 14, 15, 16, 17, 18, 19, 20, 21) s'élargissant radialement vers l'extérieur et ouvert radialement vers l'extérieur, qui est fermé par un élément de surface d'arrivée du courant (31, 35) reliant chaque fois les deux ailettes de séparation (11) voisines, suivant la direction radiale, en se référant à la direction (7) du courant de moût, les éléments de surface d'arrivée du courant (31, 35) de chacun des secteurs de courant (12, 13, 14, 15, 16, 17, 18, 19, 20, 21) voisins présentant, de l'intérieur radialement vers l'extérieur radialement, un angle d'incidence (α, β) différent, par rapport à un plan perpendiculaire à la direction d'arrivée du courant (7).

2. Dispositif de guidage du courant suivant la revendication 1, **caractérisé en ce que** quatre à seize, de préférence dix, secteurs de courant (12, 13, 14, 15, 16, 17, 18, 19, 20, 21) sont prévus, qui sont disposés sur le dispositif de guidage du courant (9), en étant répartis régulièrement sur la périphérie.

3. Dispositif de guidage du courant suivant la revendication 1 ou la revendication 2, **caractérisé en ce que** les éléments de surface d'arrivée du courant (35) des secteurs de courant pairs (12, 14, 16, 18, 20) formant un premier groupe, présentent le même angle d'incidence (β) et les éléments de surface d'arrivée du courant (31) des secteurs de courant impairs (13, 15, 17, 19, 21) présentent un même angle d'incidence (α) différent du premier angle d'incidence (β).

4. Dispositif de guidage du courant suivant l'une des revendications 1 à 3, **caractérisé par**
un chapeau conique (10) essentiellement plat, comportant une pointe dirigée en sens opposé au côté d'arrivée du courant, sur la surface interne duquel sont disposées les ailettes de séparation (11), de telle façon que les éléments de surface d'arrivée du courant (35) du premier groupe de secteurs de courant (12, 14, 16, 18, 20) sont formés par la surface interne de la pointe.

5. Dispositif de guidage du courant suivant l'une des revendications 1 à 4, **caractérisé en ce que**
la surface enveloppe des éléments de surface d'arrivée du courant (31) du deuxième groupe de secteurs de courant (13, 15, 17, 19, 21) correspond à une partie de surface enveloppe d'un cône ou d'une pyramide à facettes multiples, l'angle d'ouverture du cône ou de la pyramide étant au moins un peu plus petit que l'angle d'ouverture du cône formé par le chapeau (10).

6. Dispositif de guidage du courant suivant l'une des revendications 1 à 5, **caractérisé en ce que**
les secteurs de courant (12, 13, 14, 15, 16, 17, 18, 19, 20, 21) présentent, en coupe radiale, une structure essentiellement triangulaire ou trapézoïdale.

7. Dispositif de guidage du courant suivant l'une des revendications 1 à 6, **caractérisé en ce que**
les ailettes de séparation (11) ont une direction essentiellement perpendiculaire aux plans radiaux (32a, 32b) du dispositif de guidage du courant (9).

8. Dispositif de guidage du courant suivant l'une des revendications 1 à 7, **caractérisé en ce que** les arêtes (28) des ailettes de séparation (11), tournées vers la sortie du moût, sont disposées dans un plan radial.

9. Dispositif de guidage du courant suivant l'une des revendications 1 à 8, **caractérisé par**
un cône de guidage (23), disposé, dans la zone médiane du dispositif de guidage du courant (9), du côté d'arrivée du courant, et comportant une pointe de cône orientée en sens opposé à la direction d'arrivée du courant (7).

10. Dispositif de guidage du courant suivant la revendication 9, **caractérisé en ce que**
les arêtes, situées radialement vers l'intérieur, de tous les éléments de surface d'arrivée du courant (31, 35), sont situées dans la zone d'une ligne circulaire (22), formée par l'appui du cône de guidage (23) sur le côté d'arrivée du courant du chapeau (10).

11. Dispositif de guidage du courant suivant la revendication 9 ou 10, **caractérisé en ce que**
les extrémités (26) des ailettes de séparation (11) s'étendant radialement vers l'intérieur se terminent dans le cône de guidage (23), et sont fixées à celui-ci, ou respectivement reçoivent une forme ajustée à celui-ci.

12. Dispositif de guidage du courant suivant l'une des revendications 1 à 11, **caractérisé en ce que**
les extrémités (27) des ailettes de séparation (11) s'étendant radialement vers l'extérieur se terminent essentiellement avec l'arête périphérique (24) du chapeau (10).

13. Dispositif de guidage du courant suivant l'une des revendications 1 à 12, **caractérisé en ce que**
les ouvertures, ouvertes radialement à l'extérieur, du deuxième groupe de secteurs de courant (13, 15, 17, 19, 21), ouvertures, qui sont chacune formées par deux ailettes de séparation (11) voisines, par l'élément de surface d'arrivée du courant (31, 35) disposé entre elles, et par l'arête périphérique (24) du chapeau (10), sont chacune fermées par un élément de fermeture (33) formé, de préférence, par une partie d'arc de cercle, le diamètre de la partie d'arc de cercle correspondant sensiblement au diamètre du chapeau (10).

14. Dispositif de guidage du courant suivant la revendication 13, **caractérisé en ce que**
les arêtes latérales (36) des éléments de fermeture (33) présentent, par rapport à toutes les ailettes de séparation (11), au moins un petit porte-à-faux, qui dépasse dans les ouvertures situées radialement vers l'extérieur du secteur de courant voisin (12,14, 16, 18, 20) du premier groupe.

15. Dispositif de guidage du courant suivant l'une des revendications 1 à 14, **caractérisé en ce que**
les ailettes de séparation (11) dirigées essentiellement radialement ont une forme , au moins légère, d'arc et, de préférence, d'une partie d'arc de cercle.

16. Dispositif de guidage du courant suivant l'une des revendication 1 à 15, **caractérisé en ce que**
les angles d'incidence (α, β) des éléments de surface d'arrivée du courant (31, 35) du premier groupe de secteur de courant (12, 14, 16, 18, 20) et/ou du deuxième groupe de secteurs de courant (13, 15, 17, 19, 21) sont réglables..

17. Dispositif de guidage du courant suivant l'une des revendications 1 à 16, **caractérisé par**
des moyens (38, 39, 40) pour régler en hauteur le dispositif de guidage du courant (9) en fonction de la sortie de moût.

## Claims

1. Flow-guiding device in a wort copper for the purpose of diverting a wort flow which is heated and conducted upwards in the wort copper, said device being arranged above the outlet of the wort flow and being capable of having the wort flow against it subject to diversion of the wort in the substantially radially outward direction, with constituent slats arranged on the flow-guiding device on the incident-flow side and extending substantially in the radial direction,
**characterised in that**
the constituent slats (11) are arranged in such a way that between each two adjacent constituent slats (11) a flow segment (12, 13, 14, 15, 16, 17, 18, 19, 20, 21) is formed which widens in the radially outward direction and which is open in the radially outward direction and which is terminated in the axial direction, relative to the incident-flow direction (7) of the wort, by an incident-flow surface element (31, 35) connecting each two adjacent constituent slats (11), the incident-flow surface elements (31, 35) of, in each instance, adjacent flow segments (12, 13, 14, 15, 16, 17, 18, 19, 20, 21) having, from radially inside to radially outside, a different setting angle (α, β) relative to a plane which is perpendicular to the incident-flow direction (7).

2. Flow-guiding device according to Claim 1,
**characterised in that**
four to sixteen, preferably ten, flow segments (12, 13, 14, 15, 16, 17, 18, 19, 20, 21) are provided which are arranged on the flow-guiding device (9), uniformly distributed over the periphery.

3. Flow-guiding device according to Claim 1 or 2,
**characterised in that**
the incident-flow surface elements (35) of the even-numbered flow segments (12, 14, 16, 18, 20) forming a first group have the same setting angle (β) and the incident-flow surface elements (31) of the odd-numbered flow segments (13, 15, 17, 19, 21) forming a second group have an equal setting angle (α) which is different from the first setting angle (β).

4. Flow-guiding device according to one of Claims 1 to 3,
**characterised by**
a substantially flat conical screen (10) with cone vertex pointing away from the incident-flow side, on the conic inner surface of which on the incident-flow side the constituent slats (11) are arranged in such a way that the incident-flow surface elements (35) of the first group of flow segments (12, 14, 16, 18, 20) are formed by the inner surface of the cone.

5. Flow-guiding device according to one of Claims 1 to 4,
**characterised in that**
the enveloping surface of the incident-flow surface elements (31) of the second group of flow segments (13, 15, 17, 19, 21) corresponds to a circumferential-surface section of a cone or of a many-sided pyramid, with the apex angle of the cone or of the pyramid being at least slightly smaller than the cone apex angle of the screen (10).

6. Flow-guiding device according to one of Claims 1 to 5,
**characterised in that**
the flow segments (12, 13, 14, 15, 16, 17, 18, 19, 20, 21) in radial section have a substantially triangular or trapezoidal design.

7. Flow-guiding device according to one of Claims 1 to 6,
**characterised in that**
the constituent slats (11) extend substantially perpendicular to the radial planes (32a, 32b) of the flow-guiding device (9).

8. Flow-guiding device according to one of Claims 1 to 7,
**characterised in that**
the edges (28) of the constituent slats (11) pointing towards the wort outlet extend in a radial plane.

9. Flow-guiding device according to one of Claims 1 to 8,
**characterised by**
a guide cone (23) arranged in the central region of the flow-guiding device (9) on the incident-flow side with cone vertex pointing contrary to the incident-flow direction (7).

10. Flow-guiding device according to Claim 9,
**characterised in that**
the edges pointing radially inwards of all the incident-flow surface elements (31, 35) are located in the region of a circular line (22) formed by the abutment of the guide cone (23) on the incident-flow side of the screen (10).

11. Flow-guiding device according to Claim 9 or 10,
**characterised in that**
the ends (26) pointing radially inwards of the constituent slats (11) pass into the guide cone (23) and are secured to or moulded onto the latter.

12. Flow-guiding device according to one of Claims 1 to 11,
**characterised in that**
the ends (27) pointing radially outwards of the constituent slats (11) substantially terminate with the peripheral edge (24) of the screen (10).

13. Flow-guiding device according to one of Claims 1 to 12,
**characterised in that**
the apertures of the second group of flow segments (13, 15, 17, 19, 21) which are open in the radially outward direction and which are formed by each two adjacent constituent slats (11), the incident-flow surface element (31) arranged in between them and the peripheral edge (24) of the screen (10) are each sealed by a terminating element (33) preferably having the shape of an arc of a divided circle, the diameter of the arc of the divided circle corresponding substantially to the diameter of the screen (10).

14. Flow-guiding device according to Claim 13,
**characterised in that**
the lateral edges (36) of the terminating elements (33) have, in relation to all the constituent slats (11), at least a small excess length which protrudes into the apertures pointing radially outwards pertaining to the adjacent flow segment (12, 14, 16, 18, 20) of the first group.

15. Flow-guiding device according to one of Claims 1 to 14,
**characterised in that**
the constituent slats (11) which extend in substantially radial manner are at least of slightly arcuate construction, preferably having the shape of an arc of a divided circle.

16. Flow-guiding device according to one of Claims 1 to 15,
**characterised in that**
the incident-flow surface elements (31, 35) of the first group of flow segments (12, 14, 16, 18, 20) and/or of the second group of flow segments (13, 15, 17, 19, 21) are adjustable in their setting angle (α, β).

17. Flow-guiding device according to one of Claims 1 to 16,
**characterised by**
means (38, 39, 40) for height adjustment of the flow-guiding device (9) relative to the wort outlet.
